# EUROPEAN PATENT SPECIFICATION

(11) **EP 1 784 028 B1**
(45) Date of publication and mention of the grant of the patent: **07.07.2010**
(21) Application number: 07102976.3
(22) Date of filing: 26.01.2004
(51) Int. Cl.: H04M 1/15

(54) **Improved method and device for short message service (SMS) rating and billing**
Verbessertes Verfahren und Vorrichtung zum Vergebühren und Verrechnen von Kurznachrichten (SMS)
Procédé et dispositif améliorés pour la tarification et facturation de messages courts (SMS)

(30) Priority: 30.01.2003 US 353995
(43) Date of publication of application: 09.05.2007
(62) Divisional of application: 04075292.5
(73) Proprietor: Redknee Inc., Mississauga ON L4W 4Y9 (CA)
(72) Inventor: Lakhani, Shailesh c/o Redknee Inc., Mississauga Ontario L4W 4Y9 (CA); Rahim, Rubens c/o Redknee Inc., Mississauga Ontario L4W 4Y9 (CA)
(74) Representative: Körber, Martin Hans

(56) References cited:
- EP-A- 1 278 359
- WO-A-01/63883
- WO-A-01/69891
- US-B1- 6 473 622

## Description

### BACKGROUND ART:

As the popularity, utility and ubiquity of Short Message Service (SMS) grows within North America (and owing to the existing maturity of it within markets as, *inter alia,* the European Common Market), telecommunications network operators (including wireless operators) undoubtedly will and/or are requiring technology of increasing sophistication to manage allied rating and billing issues. In addressing this, the prior art demonstrates considerable weaknesses and limitations.

Consider, U.S. Patent 6,473,622 to Meuronen, entitled Billing mobile terminated short messages, which discloses methods (and equipment) relevant to implementing the billing of short messages (SM) within mobile telephony. According to the specification, "the method comprises steps wherein a message is submitted to a short message service centre to be delivered to a subscriber; the message is delivered from the short message service centre to the mobile station of the subscriber via the mobile communication system; and at least one charge record is created per each transferred short message." Needless to say, the advances represented by our invention of present, remain relevant to both mobile terminated (MT) and mobile origination (MO) short messages, and indeed architectural disparity aside, speaks specifically to the differentiated billing of SM traffic and even of the logic required to bar such messages where appropriate.

WO 01/63883 A2 describes a prepaid messaging system which uses an open network standard and which support pre-payment of enhanced Internet messaging services.

Additionally, U.S. Patent Application No. 20020029189 by Titus, et al., entitled Prepaid short messaging, details a method and apparatus for handling prepaid messaging service wherein a short message is tariffed before transmission by querying an account database. Our invention provides the capability to integrate with different SCPs using any number of protocols (including CAMEL, INAP, or TCP/IP). This enables and proffers the telecommunications network operator a centralized subscriber prepaid account database for different types of services such as SMS, MMS, Voice, etc. Indeed, the patent application by Titus et al., uses an internal database for prepaid SMS balance only.

In addition to which, our invention retains the capability to relay SMS traffic (through, for instance, SMPP or UCP protocols) into the SMSC and furthermore the approach suggested by Titus et al.'s patent application require(s) changes to the said SMSC to support triggering thereof.

Additionally, Titus et al. also does not teach or suggest a method of utilizing existing pre-paid infrastructure which may have already been deployed for the purpose of supporting pre-paid circuit switched services. Nor does it teach or suggest a method of providing a rating rules engine for the purpose of characterizing the nature of and rating SMS traffic in an efficient manner. And indeed, it seems to presume that each message is delivered successfully.

And aside from supporting both prepaid and postpaid billing, our Improved Method and System for Short Message Service (SMS) Rating and Billing allows messages (MO and MT) to be rejected immediately (e.g. in case of insufficient balance) before such message(s) are even relayed to the SMSC. Thereby reducing the capacity requirement for the SMSC, and indeed allows for seamless integration with said SMSC.

### TECHNICAL FIELD:

The present invention relates generally to telecommunication network implementations; and in particular to an improved method and device for Short Message Service (SMS) rating and billing.

### SUMMARY OF THE INVENTION:

The Improved Method and System for Short Message Service (SMS) Rating and Billing disclosed herein provides for real time, rating and billing of mobile originated short messages via Signaling System 7 (SS7) from a telecommunication carrier's and/or network operator's Short Message Service Center (SMSC) onto an Intelligent Network (IN) Prepaid system. Practitioners skilled in the art will recognize that a variety of signaling systems, protocols and related technologies may be utilized without diluting the intent and scope of the invention of present.

The present invention relates to a method for rating and billing SMS traffic and to a corresponding device according to the features of respective independents claims 1 and 17.

The art has been crafted to accommodate for both mobile originated (MO) and mobile terminated (MT) Short Messages (SM). For the purposes of demonstration and elucidation herein, the MO Billing is accomplished through SS7 or SMPP Loop Server interfaces, whereas MT Billing is accomplished through a SMPP Relay interface. Practitioners skilled in the art will recognize that interfaces mentioned remain for the purposes of illustration, and that a variety of signaling systems, protocols and related technologies may be utilized without diluting the intent and scope of the invention of present

Further to which, the Improved Method and System for Short Message Service (SMS) Rating and Billing has been preferentially embodied with the logic which would enable and disable SM services for given pre-paid mobile subscriber's via any number of suitable provisioning interface(s) should said subscriber's balance drop below a defined threshold.

### BRIEF DESCRIPTION OF THE DRAWINGS:

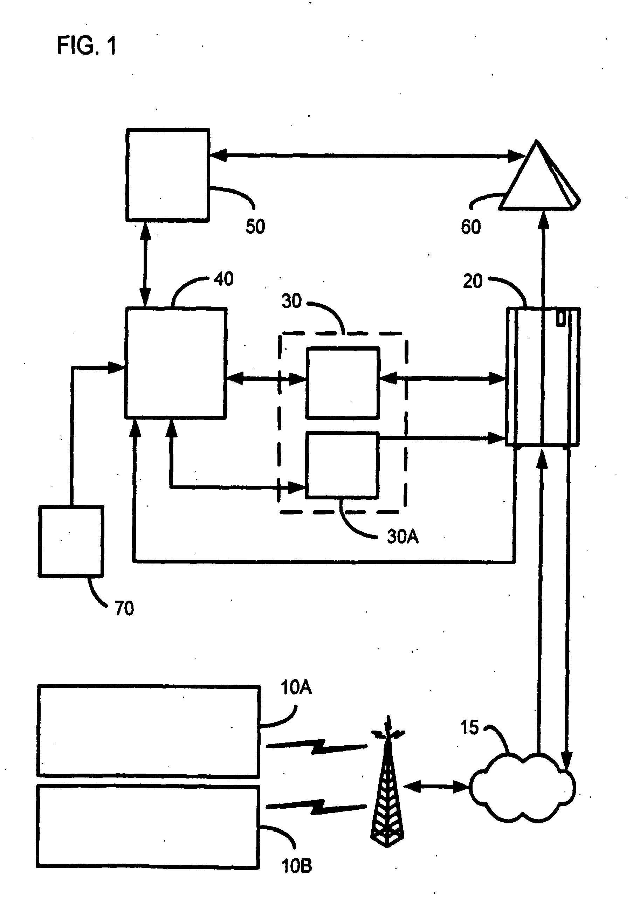

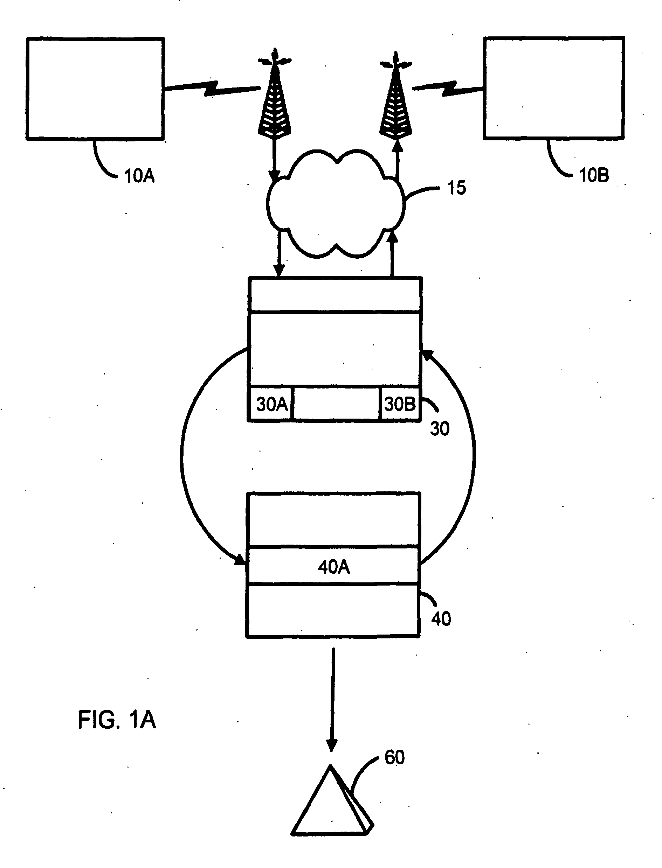

FIG. 1 illustrates a typical, non-limiting embodiment of the system level architecture employed in the disclosure of present;
FIG. 1A details a Short Message Peer to Peer (SMPP) Loop Server method which permits the billing and rating of mobile originated short message which utilize the SMPP Protocol.

### DETAILED DESCRIPTION OF THE PREFERRED EMBODIMENTS:

For the purposes of demonstration and elucidation herein, the MO Billing is accomplished through SS7 or SMPP Loop Server interfaces, whereas MT Billing is accomplished through a SMPP Relay interface.

With reference to FIG. 1. for mobile originated (MO) 10A Short Message Service (SMS) traffic via an Signaling System 7 (SS7) Protocol, the Improved Method and System for Short Message Service (SMS) Rating and Billing's 40 SS7 MO Module (not shown) connects to telecommunication's network operator's Mobile Switching Centers (MSCs) 20 (via well-known switiching technologies through the telecommunications network 15) and Short Message Service Centers (SMSCs) 30 (via Signal Transfer Points (STPs), in this instance) to receive mobile originated SMS traffic. Practitioners skilled in the art will recognize that the signaling systems mentioned remain for the purposes of illustration and simplicity, and that a variety of signaling systems, protocols and related technologies may be utilized without diluting the intent and scope of the invention of present.

Being directly in the path of mobile originated traffic, the Improved Method and System 40 is able to rate in real-time messages before they are submitted to the SMSC (beta) for delivery. This enables carriers and/or telecommunications network operator's to ensure their Prepaid Subscribers have sufficient funds for sending messages, with no SMSC 30 modifications. STPs connected to 40 are responsible for routing the SMSC# used by the network to the Improved Method and System 40. (A generic SMS router is represented at 70).

The Improved Method and System for Short Message Service (SMS) Rating and Billing 40 rates the incoming messages using its internalized Rating Rules (RR) (circumscribed in greater depth below). The method and system 40 then makes a request to an Open Charging (OC) middleware platform and gateway system 50 as detailed in United States Patent Application 10/307335 to ensure prepaid subscribers have sufficient funds in their prepaid account before the MO SM gets sent to the relevant SMSC. Where the account has insufficient balance, the MO message is rejected and in turn not delivered to the SMSC. Technicians skilled in the art will recognize that the invention of present need not be limited to the aforementioned Open Charging (OC) middleware platform and gateway system and other similar network implementations may be employed without diluting the intent and scope as such.

The internalized Rating Rules (RR) of the Improved Method and System for Short Message Service (SMS) Rating and Billing 40 determines the tariff for a message depending on the rate plans configured for that subscriber. And as such, may illustratively include originating or terminating address, time of day, day of week, holidays. The RR allow for considerable flexibility in setting the amount to be charged for a given message type. Indeed, the Improved Method and System 40 may be, in alternate embodiments, configured to charge on the message originator, message terminator, or both.

The RR architecture defines the procedure used to select a rule and the parameters available for rating a message or call. In the preferred embodiment, rules are considered in order according to priority assigned by the telecommunications network operator in question. The first rule that matches a given event's criteria will be used and all other rules will be ignored. The logic of the Internalized Rating Rules will ordinarily only consider rules with a service provider ID matching that of the incoming request. A rate can be charged based on the user's MSISDN or rate plan. Where both fields are provided within a rating request, the rate plan will be used to determine a rate. Should this method yield no rate, the MSISDN (in the alternative) will then be used to determine a rate.

In varying embodiment, where no rules match, the message/call will be assumed free of charge. Indeed, any non-billable messages/calls should be placed at the beginning of the rule set to allow for quick rating and discards, thereby advancing and augmenting the art. The currency that the charge is submitted in is a configurable parameter. The currency applies to all transactions and all rates are to that currency.

For ease of reference, the following table (Table 1) seeks to outline the rating rule architecture in a non-limiting, illustrative manner.

**Table 1 Rating Rule Architecture**

| **Title** | **Description** |
|---|---|
| Rule # | The Rule #. Rules are processed in this order, starting from 1 increasing to DEF. |
| SPID | The Service Provider this rule belongs to. Required for MSP compliance |
| Originating TON/NPI/ MSISDN | The Originating MSISDN of the subscriber. "RPx" for Rate Plan where x is the rate plan #, * for any. Partials allowed |
| Term TON/NPI/ MSISDN | The Terminating MSISDN of the subscriber. "RPx" for Rate Plan where x is the rate plan #, * for any. Partials allowed |
| Day | The day that this rule applies. This can be one of: Monday, Tuesday, Wednesday, Thursday, Friday, Saturday, Sunday, Weekdays (Mon-Fri), Weekends (Sat, Sun), Holidays (see Holiday table), Everyday (week) |
| Start Time | The Start Time, based on source application time, that the rule applies |
| End Time | The End Time, based on source application time, that the rule applies |
| Ported Number | Boolean representing charging for ported numbers. |
| Orig Flat Rate | The flat rate in local currency charged to the originating MSISDN |
| Term Flat Rate | The flat rate in local currency charged to the terminating MSISDN |
| Var Bill Interval | Billing interval (seconds) applicable to a call. For example, if a carrier sets this variable to 6, a 50 second call would be rated as a 54 second call. |
| Orig Var Rate | The variable rate in local currency charged to the originating MSIDN**.** If "B<ID>" is inserted into the field, it indicates that bucket rating applies and rates are determined from the BucketRateTable. |
| Term Var Rate | The variable rate in local currency charged to the terminating MSISDN. If "B<ID>" is inserted into the field, it indicates that bucket rating applies and rates are determined from the BucketRateTable. |

As the RR remain principal to the project at hand, it may be illustrative to render a sample rating structure. For instance, assume that there are two (2) Service Providers. Both Service Providers do not charge for MWI. The MWls are generated from MSISDN 15149911123. Service Provider one (1) charges five (5) cents a message for both originating and terminating messages. Service Provider two (2) has unlimited mobile terminating but charges ten (10) cents for each mobile originated message. All of Service Provider one (1) subscribers are provisioned via the provisioning interface under Rate Plan one (1) and all of Service Provider two (2) subscribers are provisioned under Rate Plan two (2). Where messages are sent between 1900h and 1959 and only from Zone one (1) (national), a half-price applies to MO messages of five (5) cents. Otherwise, the full charge of ten (10) cents applies. To configure this, the RR would be created accordingly (Table 2) (some fields are omitted for brevity):

**Table 2 Sample Rating Rule Set**

| **Rule** | **SPID** | **O.MSID** | **T.MISD** | **Start** | **Day** | **End** | **ZS** | **O.Rate** | **T.Rate** |
|---|---|---|---|---|---|---|---|---|---|
| 1 | 1 | 15149911123 | * | 0000 | ED | 2359 | | 0 | 0 |
| 2 | 2 | 15149811123 | * | 0000 | ED | 2359 | | 0 | 0 |
| 3 | 1 | RP1 | * | 0000 | ED | 2359 | | 5 | 0 |
| 4 | 1 | * | RP1 | 0000 | ED | 2359 | | 0 | 5 |
| 5 | 2 | RP2 | * | 1900 | ED | 1959 | 1 | 5 | 0 |
| 6 | 2 | RP2 | * | 0000 | ED | 2359 | | B1 | 0 |
| 7 | 2 | * | RP2 | 0000 | ED | 2359 | | 0 | 0 |
| 8 | * | * | * | 0000 | ED | 2359 | | 0 | 0 |

In alternate embodiments as MO SM billing evolves, and with reference to FIG. 1A, should the carrier or telecommunications network operator in question wish to utilize Short Message Peer to Peer (SMPP) to provide mobile originated short message billing, an SMPP Loop Server (SMPP LS) method has been devised which allows billing of mobile originated short messages by having the SMSC 30 route all messages through a SMPP receiver interface (articulated at 30). Whereby the SMSC 30 (30A conceptually) is configured to route inbound SMs (from the originating device at 10A) to a SMPP Receiver Applications Interface Module (AIM) (again, articulated at 30), and additionally where the TON/NPI (Type-Of-Number and Numbering Plan Identification, respectively) are changed to permit routing to Mobile Network AIM (or similar) (30B conceptually) (for routing through the network 15 to the recipient mobile device 10B). To implement this additional advancement, the Improved Method and System for Short Message Service (SMS) Rating and Billing 40 need be augmented with an SMPP Relay 40A Balance query and deduct functions may also be then performed with the SCP at 60.

With reference again to FIG. 1, now for mobile terminated (MT) 10B Short Message Service (SMS) traffic a Short Message Peer to Peer (SMPP) Relay Module (SMPP RM) is provided for, which rates messages that are sent over an SMPP protocol connection to a given carrier's subscriber(s).

. The SMPP Relay monitors messages sent via the SMPP protocol, intercepts and rates them accordingly (as per the RR defined prior); thereupon, the method and system 40 then makes a request to an Open Charging (OC) middleware platform and gateway system 50 as detailed in United States Patent Application 10/307335 to ensure Prepaid subscribers have sufficient funds in their prepaid account before the MT SM gets sent to the relevant SMSC (beta) 30A. Where the account remains of insufficient balance, the message is rejected and is not sent to the SMSC beta 30A. (The logic has been articulated such that messages to Postpaid subscriber's accounts are not intercepted, and are simply passed through to the SMSC beta 30A for delivery). Technicians skilled in the art will recognize that the invention of present need not be limited to the aforementioned Open Charging (OC) middleware platform and gateway system and other similar network implementations may be employed without diluting the intent and scope as such.

Practitioners skilled in the art will recognize that the signaling systems mentioned remain for the purposes of illustration and simplicity, and that a variety of signaling systems, protocols and related technologies may be utilized without diluting the intent and scope of the invention of present. As an instance, the art can be articulated to accommodate for MT SMS traffic via a Universal Computer Protocol (UCP).

The Improved Method and System for Short Message Service (SMS) Rating and Billing, in alternate embodiments, supports the capability to notify subscribers of insufficient balances via SMS notification messages. Separate notification messages can be defined for messages that fail due to MO and MT insufficient balance scenarios.

For instance, for mobile terminated (MT) transactions, the so-labeled "Ensure Delivery and Re-credit Mode", enables seamless and (for want of a better qualifier) perfect billing and charging for MT SMS messages. In this alternate embodiment, interaction with the SCP 60 is required to permit re-crediting of susbcribers' account balances.

SM delivery receipts are used to guarantee delivery at the handset. If the message is indicated to be undelivered, the message is re-rated and re-credited to the subscriber's account. The logic of this, alternate, said message management mode allows a single SMPP transmitter and a single SMPP receiver connection per instance of the SMPP Relay. This requirement remains largely due to the Message Management mode requiring delivery receipts to be sent back to the content provider (optional).

The submit_sm message is rated by the Improved Method and System for Short Message Service (SMS) Rating and Billing 40. In the case of sufficient balance, the message is charged by the said system 40. The delivery receipt flag is also set by the system 40 before submission to the SMSC, if not already set by the submitting SMPP entity for messages from content providers defined in the content provider routing table. The delivery receipt is used for later re-crediting the subscriber's account in the case of unsuccessful delivery. After submission to the SMSC and receipt of the submit_sm_resp message from the SMSC, this message is propagated back to the submitting SMPP entity.

In the case of insufficient balance, the Improved Method and System for Short Message Service (SMS) Rating and Billing 40 generates a submit_sm_resp message back to the submitting SMPP entity to accept the message. Also, a so-labeled phase 1 delivery receipt is passed back to the receiver connected to the SMPP Relay instance to indicate the message was not delivered. The reason field in the phase 1 delivery receipt remains configurable.

In a further alternate embodiment, deliver receipts are the only deliver_sm messages processed by the system 40 for billing and charging purposes. Deliver_sm messages can be processed by the Content Provider routing table for correct routing the appropriate content provider. Delivery receipts received by the Improved Method and System for Short Message Service (SMS) Rating and Billing 40 indicating successful delivery are passed back the ESME. Receipts indicating unsuccessful delivery for postpaid subscribers are also passed back to the ESME. Receipts indicating unsuccessful delivery for prepaid subscribers are processed by the system 40. Said system 40 re-rates and re-credits the monies for the unsuccessfully delivered message back to the subscriber's account for content providers defined in the content provider routing table. The logic for this said re-crediting functionality described erstwhile may also be disabled in its entirety given the appropriate configuration parameter.

## Claims

1. A method for rating and billing Short Message Service traffic comprising:
receiving an SMS message at a SMS Rating and Billing Module (40) that appears to be a Short Message Service Center SMSC from an originating mobile device (10A) via a network (15);
determining rating and billing for said SMS message at said SMS Rating and Billing Module (40); and,
based on results of said determining step, either:
routing said SMS message from said SMS Rating and Billing Module (40) to a Short Message Service Center SMSC (30), for delivery to a recipient mobile device (10B); or
rejecting further delivery of said SMS message.

2. The method of claim 1, wherein the SMS message is received at a SMS Rating and Billing Module utilizing the Signalling System 7 Protocol or Short Message Peer to Peer (SMPP) Protocol.

3. The method of claim 1 or claim 2 wherein said routing step is performed if said SMS Rating and Billing Module (40) determines that a prepaid subscriber associated with said originating mobile (10A) has sufficient funds for sending said SMS message.

4. The method of claim 1 or claim 2 wherein said routing step is performed if said SMS Rating and Billing Module (40) determines that a prepaid subscriber associated with said recipient mobile device (10B) has sufficient funds for receiving said SMS message.

5. The method of claim 1 or claim 2 wherein said routing step is performed if said SMS Rating and Billing Module (40) determines that a prepaid subscriber associated with said originating mobile (10A) has sufficient funds for sending said SMS message and if SMS Rating and Billing Module (40) determines that a prepaid subscriber associated with said recipient mobile device (10B) has sufficient funds for receiving said SMS message.

6. The method of any one of claims 1-5 wherein said Rating and Billing Module maintains an internalized set of rating rules for establishing a tariff for the SMS message depending on a rate plan configured for a subscriber respective to at least one of said mobile devices (10A, 10B).

7. The method of claim 6 wherein said rating rules include at least one of an address for said originating mobile device (10A), an address for said recipient mobile device (10B), a time of day, a day of week, and a holiday.

8. The method of claims 6 or 7 wherein said rating rules are considered in order according to a priority assigned by a telecommunications network operator operating said network (15) and/or said SMSC (30).

9. The method of claim 8 wherein said Rating and Billing Module (40) only considers a first rule matching a given event's criteria.

10. The method of claim 8 wherein said Rating and Billing Module (40) only considers rules with a service provider ID matching a service provider ID of said SMS message.

11. The method of claim 8 wherein a rate according to said rating rules is based on at least one of
an MSISDN or a rate plan associated with at least one of said mobile devices (10A, 10B).

12. The method of any of claims 1-11 wherein an account associated with at least one of said mobile devices (10A, 10B) is deducted in association with said step of routing said SMS message from said SMS Rating and Billing Module (40) to said SMSC (30) for delivery to said recipient mobile device (10B).

13. The method of claim 8 wherein when no rating rules match said any of a given event's criteria, then said routing of said SMS message from said SMS Rating and Billing Module 40 to said SMSC (30) is subject to a default charge.

14. The method of claim 13 wherein the default charge is a free charge.

15. The method of any of claims 6-14 wherein said rating rules comprise an architecture that includes at least one of the fields of:
a prioritization number indicating an order in which rules are processed;
an SPID indicating a Service Provider associated with a particular rule;
an originating identifier for said originating mobile device (10A), said originating
identifier being one of a Type-Of-Number, known as TON, Numbering Plan Identification, known as NPI, and Mobile Station Integrated Services Digital Network Number, known as MSISDN;
a terminating identifier for said recipient mobile device (I0B), said terminating identifier being one of a TON, NPI or MSISDN;
a day on which a particular rule applies;
a start time at which a particular rule applies;
an end time at which a particular rule applies;
a first flat rate in a local currency charged to said originating identifier;
a second flat rate in local currency charged to said terminating identifier;
a billing interval in seconds applicable to a call;
a first variable rate in a local currency charged to said originating identifier; and
a second variable rate in local currency charged to said terminating identifier.

16. The method of any of the claims above, wherein said routing of said SMS message from said network (15) to said SMS Rating and Billing Module comprises routing said SMS message from an MSC (20) to said SMSC (30), and routing said SMS message from said SMSC (30) to the SMS Rating and Billing Module (40) via a Short Message Peer to Peer receiver interface utilizing the Short Message Peer to Peer Protocol.

17. A device (40) for rating and billing Short Message Service traffic comprising:
means for receiving an SMS message at a SMS Rating and Billing Module (40) that appears to be a Short Message Service Center SMSC from a originating mobile device (10A) via a network (15);
means for determining rating and billing for said SMS message; and,
means for selectively routing said SMS message to a Short Message Service Center, SMSC (30), for delivery to a recipient mobile device (10B); or rejecting further delivery of said SMS message based on results from said means for determining rating and billing.

18. The device of claim 17 wherein the SMS message is received at a SMS Rating and Billing Module utilizing the Signalling System 7 Protocol or Short Message Peer to Peer (SMPP) Protocol.

19. The device (40) of claim 17 wherein said routing is performed if said means for SMS rating and billing determines that a prepaid subscriber associated with said originating mobile (10A) has sufficient funds for sending said SMS message.

20. The device (40) of claim 17 wherein said routing is performed if said means for SMS rating and billing determines that a prepaid subscriber associated with said recipient mobile device (10B) has sufficient funds for receiving said SMS message.

21. The device (40) of claim 17 wherein said routing step is performed if said means for SMS rating and billing determines that a prepaid subscriber associated with said originating mobile (10A) has sufficient funds for sending said SMS message and if said means for SMS rating and billing determines that a prepaid subscriber associated with said recipient mobile device (10B) has sufficient funds for receiving said SMS message.

22. The device (40) of any one of claims 17 - 21 wherein said means for rating and billing maintains an internalized set of rating rules for establishing a tariff for SMS depending on a rate plans configured for a subscriber respective to at least one of said mobile devices (10A, 10B).

23. The device (40) of claim 22 wherein said rating rules include at least one of an address for said originating mobile device (10A), an address for said recipient mobile device (10B), a time of day, a day of week, and a holiday.

24. The device (40) of any one of claims 22 or 23 wherein said rating rules are considered in order according to a priority assigned by a telecommunications network operator operating said network (15) and/or said SMSC (30).

25. The device (40) of claim 22 wherein said means for rating and billing only considers a first rule matching a given event's criteria.

26. The device (40) of claim 22 said means for rating and billing only considers rules with a service provider ID matching a service provider ID of said SMS message.

27. The device (40) of claim 22 wherein a rate according to said rating rules is based on at least one of an MSISDN or a rate plan associated with at least one of said mobile devices (10A, 10B).

28. The device (40) of any one of claims 18-27 wherein an account associated with at least one of said mobile devices (10A, 10B) is deducted in association with said routing of said SMS message from said means for SMS rating and billing to said SMSC (30) for delivery to said recipient mobile device (10B).

29. The device (40) of claim 22 wherein when no rating rules match said any of a given event's criteria, then said routing of said SMS message from said SMS Rating and Billing Module 40 to said SMSC (30) is subject to a default charge.

30. The device (40) of claim 29 wherein the default charge is a free charge.

31. The device (40) of any one of claims 18-30 wherein said rating rules comprise an architecture that includes at least one of the fields of:
a prioritization number indicating an order in which rules are processed;
an SPID indicating a Service Provider associated with a particular rule;
an originating identifier for said originating mobile device (10A), said originating identifier being one of a TypeOf-Number, known as TON, Numbering Plan Identification, known as NPI, and Mobile Station Integrated Services Digital Network Number, known as MSISDN;
a terminating identifier for said recipient mobile device (10B), said terminating identifier being one of a TON, NPI or MSISDN;
a day on which a particular rule applies;
a start time at which a particular rule applies;
an end time at which a particular rule applies;
a first flat rate in a local currency charged to said originating identifier;
a second flat rate in local currency charged to said terminating identifier;
a billing interval in seconds applicable to a call;
a first variable rate in a local currency charged to said originating identifier; and
a second variable rate in local currency charged to said terminating identifier.

## Patentansprüche

1. Verfahren zum Bewerten und Berechnen von Kurznachrichten-Mobilfunkdienstverkehr, umfassend:
Empfangen einer SMS-Nachricht an einem SMS Bewertungs- und Berechnungsmodul (40), das ein Kurznachrichten-Dienstzentrum SMSC zu sein scheint, von einer abgebenden Mobilvorrichtung (10A) über ein Netzwerk (15);
Bestimmen eines Bewertens und Berechnens für die SMS-Nachricht an dem SMS Bewertungs- und Berechnungsmodul (40); und
basierend auf Ergebnissen des Bestimmungsschritts, entweder:
Weiterleiten der SMS-Nachricht von dem SMS Bewertungs- und Berechnungsmodul (40) zu einem Kurznachrichten-Dienstzentrum SMSC (30) zur Zuführung an eine Empfänger-Mobilvorrichtung (10B); oder
Ablehnen weiterer Zuführung der SMS-Nachricht.

2. Verfahren gemäß Anspruch 1, wobei die SMS-Nachricht an dem SMS Bewertungs- und Berechnungsmodul unter Verwendung des Signalsystem-7-Protokolls oder des Kurznachrichten Peer-to-Peer (SMPP) Protokolls empfangen wird.

3. Verfahren gemäß Anspruch 1 oder Anspruch 2, wobei der Weiterleitungsschritt ausgeführt wird, wenn das SMS Bewertungs- und Berechnungsmodul (40) bestimmt, dass ein Vorauszahl-Teilnehmer, der mit der abgebenden Mobilvorrichtung (10A) assoziiert ist, ein ausreichendes Guthaben zum Senden der SMS-Nachricht hat.

4. Das Verfahren gemäß Anspruch 1 oder Anspruch 2, wobei der Weiterleitungsschritt ausgeführt wird, wenn das SMS Bewertungs- und Berechnungsmodul (40) bestimmt, dass ein Vorauszahl-Teilnehmer, der mit der Empfänger-Mobilvorrichtung (10B) assoziiert ist, ein ausreichendes Guthaben zum Empfangen der SMS-Nachricht hat.

5. Das Verfahren gemäß Anspruch 1 oder Anspruch 2, wobei der Weiterleitungsschritt ausgeführt wird, wenn das SMS Bewertungs- und Berechnungsmodul (40) bestimmt, dass ein Vorauszahl-Teilnehmer, der mit der abgebenden Mobilvorrichtung (10A) assoziiert ist, ein ausreichendes Guthaben zum Senden der SMS-Nachricht hat, und wenn das SMS Bewertungs- und Berechnungsmodul (40) bestimmt, dass ein Vorauszahl-Teilnehmer, der mit der Empfänger-Mobilvorrichtung (10B) assoziiert ist, ein ausreichendes Guthaben zum Empfangen der SMS-Nachricht hat.

6. Das Verfahren gemäß irgendeinem der Ansprüche 1 bis 5, wobei das Bewertungs- und Berechnungsmodul einen internalisierten Satz von Bewertungsregeln zum Erstellen eines Tarifs für die SMS-Nachricht in Abhängigkeit von Bewertungsplänen aufrecht erhält, welche für einen Teilnehmer bezüglich zumindest einer der Mobilvorrichtungen (10A, 10B) konfiguriert ist.

7. Das Verfahren gemäß Anspruch 6, wobei die Bewertungsregeln zumindest eines enthalten von einer Adresse für die abgebende Mobilvorrichtung (10A), eine Adresse für die Empfänger-Mobilvorrichtung (10B), eine Uhrzeit, einen Wochentag und einen Feiertag.

8. Das Verfahren gemäß Anspruch 6 oder 7, wobei die Bewertungsregeln in einer Reihenfolge gemäß einer Priorität in Betracht gezogen werden, welche durch einen Telekommunikationsnetzwerkbetreiber zugewiesen wird, der die MSC (2) und/oder die SMSC (30) betreibt.

9. Das Verfahren gemäß Anspruch 8, wobei das Bewertungs- und Berechnungsmodul (40) nur eine erste Regel in Betracht zieht, welche mit einem Kriterium eines vorgegebenen Ereignisses übereinstimmt.

10. Das Verfahren gemäß Anspruch 8, wobei das Bewertungs- und Berechnungsmodul (40) nur Regeln mit einer Dienstleister-ID in Betracht zieht, welche mit einer Dienstleister-ID der SMS-Nachricht übereinstimmt.

11. Das Verfahren gemäß Anspruch 8, wobei ein Kostensatz gemäß der Bewertungsregel auf zumindest einer MSISDN oder einem Kostensatzplan basiert, welcher mit zumindest einer der Mobilvorrichtungen (10A, 10B) assoziiert ist.

12. Das Verfahren gemäß irgendeinem der Ansprüche 1 bis 11, wobei ein Konto, welches mit zumindest einer der Mobilvorrichtungen (10A, 10B) assoziiert ist, in Assoziation mit dem Schritt des Weiterleitens der SMS-Nachricht von dem SMS Bewertungs- und Berechnungsmodul (40) zu der SMSC (30) zum Zuführen zu der Empfänger-Mobilvorrichtung (10B) belastet wird.

13. Das Verfahren gemäß Anspruch 8, wobei, wenn keine Bewertungsregeln mit keinem der gegebenen Ereigniskriterien übereinstimmen, dann das Weiterleiten der SMS-Nachricht von dem SMS Bewertungs- und Berechnungsmodul (40) zu der SMSC (30) einer Standardgebühr unterliegt.

14. Das Verfahren gemäß Anspruch 13, wobei die Standardgebühr eine freie Gebühr ist.

15. Das Verfahren gemäß irgendeinem der Ansprüche 6 bis 14, wobei die Bewertungsregeln eine Architektur umfassen, die zumindest eines der Gebiete enthält von:
eine Priorisierungsnummer, welche eine Reihenfolge kennzeichnet, in welcher die Regeln verarbeitet werden;
eine SPID, welche einen Dienstleister kennzeichnet, der mit einer bestimmten Regel assoziiert ist;
einen abgebenden Identifikator für die abgebende Mobilvorrichtung (10A), wobei der abgebende Identifikator einer ist von einem Nummerntyp, bekannt als TON, einer Nummerierungsplan-Identifizierung, bekannt als NPI, und einer Mobilfunkstation-integrierte-Dienste-digitale-Netzwerknummer, bekannt als MSISDN;
einen abschließenden Identifikator für die Empfänger-Mobilvorrichtung (10B), wobei der abschließende Identifikator einer ist aus TON, NPI oder MSISDN;
einen Tag, an welchem die bestimmte Regel anwendbar ist;
eine Startzeit, zu welcher eine bestimmte Regel anwendbar ist;
eine Beendigungszeit, zu welcher eine bestimmte Regel anwendbar ist;
eine erste Pauschalgebühr in einer lokalen Währung, welche dem abgebenden Identifikator belastet wird;
eine zweite Pauschalgebühr in einer lokalen Währung, welche dem abschließenden Identifikator belastet wird;
ein Abrechnungsintervall in Sekunden, welches auf einen Anruf anwendbar ist;
eine erste variable Gebühr in einer lokalen Währung, welche dem abgebenden Identifikator belastet wird; und
eine zweite variable Gebühr in einer lokalen Währung, welche dem abschließenden Identifikator belastet wird.

16. Das Verfahren gemäß irgendeinem der obigen Ansprüche, wobei das Weiterleiten der SMS-Nachricht von der MSC (20) zu dem SMS Bewertungs- und Berechnungsmodul ein Weiterleiten der SMS-Nachricht von der MSC (20) zu der SMSC (30) und ein Weiterleiten der SMS-Nachricht von der SMSC (30) zu dem SMS Bewertungs- und Berechnungsmodul (40) über eine Kurznachrichten-Peer-to-Peer-Empfängerschnittstelle umfasst, welche die Kurznachricht-Peer-to-Peer-Protokoll verwendet.

17. Eine Vorrichtung (40) zum Bewerten und Berechnen von Verkehr von Kurznachrichtdiensten, umfassend:
Mittel zum Empfangen einer SMS-Nachricht an einem SMS Bewertungs - und Berechnungsmodul (40), das ein Kurznachrichten-Dienstzentrum SMSC zu sein scheint von einer abgebenden Mobilvorrichtung (10A) über ein Netzwerk (15), MSC (20);
Mittel zum Bestimmen einer Bewertung und Berechnung für die SMS-Nachricht; und
Mittel zum selektiven Weiterleiten der SMS-Nachricht zu einem Kurznachrichten-Dienstleistungszentrum SMSC (30) zum Zuführen an eine Empfänger-Mobilvorrichtung (10B); oder zum Ablehnen weiteren Zuführens der SMS-Nachricht basierend auf Ergebnissen von dem Mittel zum Bestimmen einer Bewertung und Berechnung.

18. Die Vorrichtung gemäß Anspruch 17, wobei die SMS-Nachricht an dem SMS Bewertungs- und Berechnungsmodul unter Verwendung des Signalsystem-7-Protokolls oder des Kurznachrichten Peer-to-Peer (SMPP) Protokolls empfangen wird.

19. Die Vorrichtung (40) gemäß Anspruch 17, wobei die Weiterleitung ausgeführt wird, wenn das Mittel zur SMS Bewertung und Berechnung bestimmt, dass ein Vorauszahl-Teilnehmer, der mit der abgebenden Mobilvorrichtung (10A) assoziiert ist, ein ausreichendes Guthaben zum Versenden der SMS-Nachricht hat.

20. Die Vorrichtung (40) gemäß Anspruch 17, wobei der Weiterleitungsschritt ausgeführt wird, wenn das Mittel zur SMS Bewertung und Berechnung bestimmt, dass ein Vorauszahl-Teilnehmer, der mit der Empfänger-Mobilvorrichtung (10B) assoziiert ist, ein ausreichendes Guthaben zum Empfangen der SMS-Nachricht hat.

21. Die Vorrichtung (40) gemäß Anspruch 17, wobei der Weiterleitungsschritt ausgeführt wird, wenn das Mittel zur SMS Bewertung und Berechnung bestimmt, dass ein Vorauszahl-Teilnehmer, der mit der abgebenden Mobilvorrichtung (10A) assoziiert ist, ein ausreichendes Guthaben zum Senden der SMS-Nachricht hat, und wenn das Mittel zur SMS Bewertung und Berechnung bestimmt, dass ein Vorauszahl-Teilnehmer, der mit der Empfänger-Mobilvorrichtung (10B) assoziiert ist, ein ausreichendes Guthaben zum Empfangen der SMS-Nachricht hat.

22. Die Vorrichtung (40) gemäß irgendeinem der Ansprüche 17 bis 21, wobei das Mittel zur Bewertung und Berechnung einen internalisierten Satz von Bewertungsregeln zum Aufbauen eines Tarifs für SMS in Abhängigkeit eines Tarifplans aufrecht erhält, welcher für einen Teilnehmer bezüglich zumindest einer der Mobilvorrichtungen (10A, 10B) konfiguriert ist.

23. Die Vorrichtung (40) gemäß Anspruch 22, wobei die Bewertungsregeln zumindest eines enthalten von einer Adresse für die abgebende Mobilvorrichtung (10A), eine Adresse für die Empfänger-Mobilvorrichtung (10B), eine Tageszeit, einen Wochentag und einen Feiertag.

24. Die Vorrichtung (40) gemäß irgendeinem der Ansprüche 22 oder 23, wobei die Bewertungsregeln in einer Reihenfolge gemäß einer Priorität in Betracht gezogen werden, welche durch einen Telekommunikationsnetzwerkbetreiber zugewiesen wird, der die MSC (2) und/oder die SMSC (30) betreibt.

25. Die Vorrichtung (40) gemäß Anspruch 22, wobei das Mittel zum Bewerten und Berechnen nur eine erste Regel in Betracht zieht, welche mit einem vorgegebenen Kriterium eines Ereignisses übereinstimmt.

26. Die Vorrichtung (40) gemäß Anspruch 22, wobei das Mittel zum Bewerten und Berechnen nur Regeln mit einer Dienstleister-ID in Betracht zieht, die mit einer Dienstleister-ID der SMS-Nachricht übereinstimmt.

27. Die Vorrichtung (40) gemäß Anspruch 22, wobei eine Gebühr gemäß den Bewertungsregeln auf zumindest einem basiert von einer MSISDN oder einem Tarifplan, der mit zumindest einer der Mobilvorrichtungen (10A, 10B) assoziiert ist.

28. Die Vorrichtung (40) gemäß irgendeinem der Ansprüche 18 bis 27, wobei ein Konto, das mit zumindest einer der Mobilvorrichtungen (10A, 10B) assoziiert ist, in Verbindung mit dem Weiterleiten der SMS-Nachricht von dem Mittel zur SMS Bewertung und Berechnung zu der SMSC (30) zum Zuführen zu der Empfänger-Mobilvorrichtung (10B) belastet wird.

29. Die Vorrichtung (40) gemäß Anspruch 22, wobei, wenn keine Bewertungsregeln mit irgendeinem der vorgegebenen Ereigniskriterien übereinstimmen, dann das Weiterleiten der SMS-Nachricht von dem SMS Bewertungs- und Berechnungsmodul (40) zu der SMSC (30) einer Standardgebühr unterliegt.

30. Die Vorrichtung (40) gemäß Anspruch 29, wobei die Standardgebühr eine freie Gebühr ist.

31. Die Vorrichtung (40) gemäß irgendeinem der Ansprüche 18 bis 30, wobei die Bewertungsregeln eine Architektur umfassen, die zumindest eines der Gebiete enthält von:
eine Priorisierungsnummer, welche eine Reihenfolge kennzeichnet, in welcher die Regeln verarbeitet werden;
eine SPID, welche einen Dienstleister kennzeichnet, der mit einer bestimmten Regel assoziiert ist;
einen abgebenden Identifikator für die abgebende Mobilvorrichtung (10A), wobei der abgebende Identifikator einer ist von einem Nummerntyp, bekannt als TON, einer Nummerierungsplan-Identifizierung, bekannt als NPI, und einer Mobilfunkstation-integrierte-Dienste-digitale-Netzwerknummer, bekannt als MSISDN;
einen abschließenden Identifikator für die Empfänger-Mobilvorrichtung (10B), wobei der abschließende Identifikator einer ist aus TON, NPI oder MSISDN;
einen Tag, an welchem die bestimmte Regel anwendbar ist;
eine Startzeit, zu welcher eine bestimmte Regel anwendbar ist;
eine Beendigungszeit, zu welcher eine bestimmte Regel anwendbar ist;
eine erste Pauschalgebühr in einer lokalen Währung, welche dem abgehenden Identifikator belastet wird;
eine zweite Pauschalgebühr in einer lokalen Währung, welche dem abschließenden Identifikator belastet wird;
ein Abrechnungsintervall in Sekunden, welches auf einen Anruf anwendbar ist;
eine erste variable Gebühr in einer lokalen Währung, welche dem abgebenden Identifikator belastet wird; und
eine zweite variable Gebühr in einer lokalen Währung, welche dem abschließenden Identifikator belastet wird.

## Revendications

1. Procédé de tarification et de facturation d'un trafic de service de messages courts comprenant :
la réception d'un message SMS au niveau d'un module de tarification et de facturation de SMS (40) qui s'avère être un centre de services de messages courts SMSC de la part d'un dispositif mobile d'origine (10A) via un réseau (15) ;
la détermination de la tarification et de la facturation dudit message SMS au niveau dudit module de tarification et de facturation de SMS (40) ; et,
sur la base des résultats de ladite étape de détermination :
l'acheminement dudit message SMS entre ledit module de tarification et de facturation de SMS (40) et un centre de services de messages courts SMSC (30), en vue de la remise à un dispositif mobile destinataire (10B) ; ou
le rejet de toute remise dudit message SMS.

2. Procédé selon la revendication 1, dans lequel le message SMS est reçu au niveau d'un module de tarification et de facturation de SMS utilisant le protocole de système de signalisation 7 ou le protocole peer-to-peer de messages courts (SMPP).

3. Procédé selon la revendication 1 ou la revendication 2, dans lequel ladite étape d'acheminement est effectuée si ledit module de tarification et de facturation de SMS (40) détermine qu'un abonné prépayé associé audit mobile d'origine (10A) possède des fonds suffisants pour envoyer ledit message SMS.

4. Procédé selon la revendication 1 ou la revendication 2, dans lequel ladite étape d'acheminement est effectuée si ledit module de tarification et de facturation de SMS (40) détermine qu'un abonné prépayé associé audit dispositif mobile destinataire (10B) possède des fonds suffisants pour recevoir ledit message SMS.

5. Procédé selon la revendication 1 ou la revendication 2, dans lequel ladite étape d'acheminement est effectuée si ledit module de tarification et de facturation de SMS (40) détermine qu'un abonné prépayé associé audit mobile d'origine (10A) possède des fonds suffisants pour envoyer ledit message SMS et si ledit module de tarification et de facturation de SMS (40) détermine qu'un abonné prépayé associé audit dispositif mobile destinataire (10B) possède des fonds suffisants pour recevoir ledit message SMS.

6. Procédé selon l'une quelconque des revendications 1 à 5, dans lequel ledit module de tarification et de facturation conserve un ensemble interne de règles de tarification destinées à établir un tarif pour le message SMS selon un plan de tarification configuré pour un abonné par rapport à au moins l'un desdits dispositifs mobiles (10A, 10B).

7. Procédé selon la revendication 6, dans lequel lesdites règles de tarification comprennent au moins l'un d'une adresse destinée audit dispositif mobile d'origine (10A), d'une adresse destinée audit dispositif mobile destinataire (10B), d'une heure de la journée, d'un jour de la semaine, et d'une période de vacances.

8. Procédé selon la revendication 6 ou 7, dans lequel lesdites règles de tarification sont considérées dans un ordre selon une priorité attribuée par un opérateur de réseau de télécommunications exploitant ledit réseau (15) et/ou ledit SMSC (30).

9. Procédé selon la revendication 8, dans lequel ledit module de tarification et de facturation (40) ne considère qu'une première règle correspondant aux critères d'un évènement donné.

10. Procédé selon la revendication 8, dans lequel ledit module de tarification et de facturation (40) ne considère que les règles ayant une identification de fournisseur de services correspondant à une identification de fournisseur de services dudit message SMS.

11. Procédé selon la revendication 8, dans lequel un tarif selon lesdites règles de tarification est basé sur au moins l'un d'un MSISDN ou d'un plan de tarification associé à au moins l'un desdits dispositifs mobiles (10A, 10B).

12. Procédé selon l'une quelconque des revendications 1 à 11, dans lequel un compte associé à au moins l'un desdits dispositifs mobiles (10A, 10B) est déduit en association avec ladite étape d'acheminement dudit message SMS entre ledit module de tarification et de facturation de SMS (40) et ledit SMSC (30) en vue de la remise audit dispositif mobile destinataire (10B).

13. Procédé selon la revendication 8, dans lequel, lorsqu'aucune règle de tarification ne correspond à aucun desdits critères d'évènement donné, ledit acheminement dudit message SMS entre ledit module de tarification et de facturation de SMS (40) et ledit SMSC (30) est alors soumis à un tarif par défaut.

14. Procédé selon la revendication 13, dans lequel le tarif par défaut est un tarif gratuit.

15. Procédé selon l'une quelconque des revendications 6 à 14, dans lequel lesdites règles de tarification comprennent une architecture qui comprend au moins l'un des champs suivants :
un numéro de hiérarchisation indiquant un ordre dans lequel les règles sont traitées ;
un SPID indiquant un fournisseur de services associé à une règle particulière ;
un identifiant d'origine dudit dispositif mobile d'origine (10A), ledit identifiant d'origine étant l'un d'un type de numéro, connu comme étant un TON, d'une identification du plan de numérotage, connue comme étant une NPI, et d'un numéro de réseau numérique de services intégrés de stations mobiles, connu comme étant un MSISDN ;
un identifiant de terminaison dudit dispositif mobile destinataire (10B), ledit identifiant de terminaison étant l'un d'un TON, d'une NPI ou d'un MSISDN ;
un jour auquel une règle particulière s'applique ;
un moment de début auquel une règle particulière s'applique ;
un moment de fin auquel une règle particulière s'applique ;
un premier tarif forfaitaire dans une devise locale, facturé audit identifiant d'origine ;
un second tarif forfaitaire dans une devise locale, facturé audit identifiant de terminaison ;
un intervalle de facturation, en secondes, applicable à un appel ;
un premier tarif variable dans une devise locale, facturé audit identifiant d'origine ; et
un second tarif variable dans une devise locale, facturé audit identifiant de terminaison.

16. Procédé selon l'une quelconque des revendications ci-dessus, dans lequel ledit acheminement dudit message SMS entre ledit réseau (15) et ledit module de tarification et de facturation de SMS comprend l'acheminement dudit message SMS entre un MSC (20) et ledit SMSC (30), et l'acheminement dudit message SMS entre ledit SMSC (30) et le module de tarification et de facturation de SMS (40) via une interface de récepteur peer-to-peer de messages courts utilisant le protocole peer-to-peer de messages courts.

17. Dispositif (40) de tarification et de facturation d'un trafic de service de messages courts comprenant :
un moyen de réception d'un message SMS au niveau d'un module de tarification et de facturation de SMS (40) qui s'avère être un centre de services de messages courts SMSC de la part d'un dispositif mobile d'origine (10A) via un réseau (15)_{;}
un moyen de détermination d'une tarification et d'une facturation pour ledit message SMS ; et,
un moyen d'acheminement sélectif dudit message SMS vers un centre de services de messages courts, SMSC (30), en vue de la remise à un dispositif mobile destinataire (10B) ; ou le rejet de toute autre remise dudit message SMS sur la base des résultats issus dudit moyen de détermination de tarification et de facturation.

18. Dispositif selon la revendication 17, dans lequel le message SMS est reçu au niveau d'un module de tarification et de facturation de SMS utilisant le protocole de système de signalisation 7 ou le protocole peer-to-peer de messages courts (SMPP).

19. Dispositif (40) selon la revendication 17, dans lequel ledit acheminement est effectué si ledit moyen de tarification et de facturation de SMS détermine qu'un abonné prépayé associé audit mobile d'origine (10A) possède des fonds suffisants pour envoyer ledit message SMS.

20. Dispositif (40) selon la revendication 17, dans lequel ledit acheminement est effectué si ledit moyen de tarification et de facturation de SMS détermine qu'un abonné prépayé associé audit dispositif mobile destinataire (10B) possède des fonds suffisants pour recevoir ledit message SMS.

21. Dispositif (40) selon la revendication 17, dans lequel ladite étape d'acheminement est effectuée si ledit moyen de tarification et de facturation de SMS détermine qu'un abonné prépayé associé audit mobile d'origine (10A) possède des fonds suffisants pour envoyer ledit message SMS et si ledit moyen de tarification et de facturation de SMS détermine qu'un abonné prépayé associé audit dispositif mobile destinataire (10B) possède des fonds suffisants pour recevoir ledit message SMS.

22. Dispositif (40) selon l'une quelconque des revendications 17 à 21, dans lequel ledit moyen de tarification et de facturation conserve un ensemble interne de règles de tarification destinées à établir un tarif pour le SMS selon un plan de tarification configuré pour un abonné par rapport à au moins l'un desdits dispositifs mobiles (10A, 10B).

23. Dispositif (40) selon la revendication 22, dans lequel lesdites règles de tarification comprennent au moins l'un d'une adresse destinée audit dispositif mobile d'origine (10A), d'une adresse destinée audit dispositif mobile destinataire (10B), d'une heure de la journée, d'un jour de la semaine, et d'une période de vacances.

24. Dispositif (40) selon la revendication 22 ou 23, dans lequel lesdites règles de tarification sont considérées dans un ordre selon une priorité attribuée par un opérateur de réseau de télécommunications exploitant ledit réseau (15) et/ou ledit SMSC (30).

25. Dispositif (40) selon la revendication 22, dans lequel ledit moyen de tarification et de facturation ne considère qu'une première règle correspondant aux critères d'un évènement donné.

26. Dispositif (40) selon la revendication 22, dans lequel ledit moyen de tarification et de facturation ne considère que les règles ayant une identification de fournisseur de services correspondant à une identification de fournisseur de services dudit message SMS.

27. Dispositif (40) selon la revendication 22, dans lequel un tarif selon lesdites règles de tarification est basé sur au moins l'un d'un MSISDN ou d'un plan de tarification associé à au moins l'un desdits dispositifs mobiles (10A, 10B).

28. Dispositif (40) selon l'une quelconque des revendications 18 à 27, dans lequel un compte associé à au moins l'un desdits dispositifs mobiles (10A, 10B) est déduit en association avec ledit acheminement dudit message SMS entre ledit moyen de tarification et de facturation de SMS et ledit SMSC (30) en vue de la remise audit dispositif mobile destinataire (10B).

29. Dispositif (40) selon la revendication 22, dans lequel, lorsqu'aucune règle de tarification ne correspond à un quelconque desdits critères d'un évènement donné, ledit acheminement dudit message SMS entre ledit module de tarification et de facturation de SMS (40) et ledit SMSC (30) est alors soumis à un tarif par défaut.

30. Dispositif (40) selon la revendication 29, dans lequel le tarif par défaut est un tarif gratuit.

31. Dispositif (40) selon l'une quelconque des revendications 18 à 30, dans lequel lesdites règles de tarification comprennent une architecture qui comprend au moins l'un des champs suivants :
un numéro de hiérarchisation indiquant un ordre dans lequel les règles sont traitées ;
un SPID indiquant un fournisseur de services associé à une règle particulière ;
un identifiant d'origine dudit dispositif mobile d'origine (10A), ledit identifiant d'origine étant l'un d'un type de numéro, connu comme étant un TON, d'une identification du plan de numérotage, connue comme étant une NPI, et d'un numéro de réseau numérique de services intégrés de stations mobiles, connu comme étant un MSISDN ;
un identifiant de terminaison dudit dispositif mobile destinataire (10B), ledit identifiant de terminaison étant l'un d'un TON, d'une NPI ou d'un MSISDN ;
un jour auquel une règle particulière s'applique ;
un moment de début auquel une règle particulière s'applique ;
un moment de fin auquel une règle particulière s'applique ;
un premier tarif forfaitaire dans une devise locale, facturé audit identifiant d'origine ;
un second tarif forfaitaire dans une devise locale, facturé audit identifiant de terminaison ;
un intervalle de facturation, en secondes, applicable à un appel ;
un premier tarif variable dans une devise locale, facturé audit identifiant d'origine ; et
un second tarif variable dans une devise locale, facturé audit identifiant de terminaison.
